# EUROPEAN PATENT APPLICATION

(11) **EP 1 802 033 A1**
(43) Date of publication of application: **27.06.2007**
(21) Application number: 05301108.6
(22) Date of filing: 23.12.2005
(51) Int. Cl.: H04L 12/24, H04L 29/06

(54) **Exchanging configuration information between a configurator and a device**

(71) Applicant: Thomson Licensing, 92100 Boulogne-Billancourt (FR)
(72) Inventor: Onno, Stéphane, 35760, SAINT GREGOIRE (FR); Lelièvre, Sylvain, 35760, MONTGERMONT (FR)
(74) Representative: Ruellan-Lemonnier, Brigitte

(57) **Abstract**

A user (30) who desires to configure a device (120, 130, 140, 150) with e.g. a network key (Kn) uses a portable configurator (10) for the purpose. The user brings the configurator to where it may communicate with the device and enters a password that the configurator uses to calculate a configuration key (Kc). The configurator then uses the configuration key (Kc) to authenticate the communication with the device that in turn retrieves a stored configuration key (Kc) to verify the communication. It is preferred that the configuration key (Kc) is transient within the configurator, i.e. that it is erased when the configurator has configured the device, so that the configurator may be used by more than one user, and that the configurator stores the network key (Kn) together with a check value (Cv) that links the network key (Kn) and the configuration key (Kc). The configurator may be embodied in a mobile phone.

## Description

### FIELD OF THE INVENTION

The present invention relates in general to configuration of devices in networks, and in particular to configuration of devices in wireless networks.

### BACKGROUND OF THE INVENTION

In wireless access networks (for example 802.11xx, WPAN 802.15xx, UWB, and Wireless USB) a shared key is generally used to protect the communication in the network. The key is required on every device that belongs to the network community and must somehow be brought to each device. A network, that may also comprise nomad devices that can be temporarily connected trough a wired connection, may relate to any wireless, wired or compound network that uses a shared key.

In for example a 802.11.x wireless network, the user usually provides a device with the key through a wired connection with a PC user interface. To achieve an acceptable security level, the key is tediously long. The process must be performed for each device in the network and also when adding or removing a device. To add to the user's annoyance, the process may require that the device is close to a PC, which obviously is not easy to manage with large and heavy devices such as large-screen TVs.

Systems based on association buttons that do away with key entry exist, but they commonly obscure the secure policy, which may mean that a malicious user easily can hack his way into the network and thereafter be able to access valuable or confidential content.

Portable configuration devices are described in US 2003/0078072 A1 and in EP 1396095. The general idea of both documents is provide a portable device that stores configuration information, the user then bringing the portable device to where the device to be configured is located. The two devices are then connected and the configuration information is transferred.

The portable configuration device solutions are useful, but they are somewhat lacking in security. In the two documents, security largely comprises securing the connection between devices and, in the former document, limiting the number of times the configuration information may be transferred.

It can therefore be appreciated that there is a need for a solution that increases the security of transfer of configuration information to devices, particularly as it is assumed that wireless devices will become ubiquitous, often located in the homes of ordinary persons who lack more than basic security skills.

### SUMMARY OF THE INVENTION

In a first aspect, the invention is directed to a configurator adapted to exchange configuration information with a device. The configurator comprises a communication interface for communication of configuration information with the device, and a processor adapted to obtain a configuration key and to use the configuration key to authenticate communication with the device via the communication interface.

In a preferred embodiment, the processor is adapted to authenticate communication by including the configuration key in a message to send to the device via the communication interface.

In a further preferred embodiment, the processor is adapted to calculate a check value that creates a link between the configuration key and the configuration information, and the configurator comprises a memory adapted to store the configuration information together with the check value.

In another preferred embodiment, the configurator further comprises a user interface adapted to accept input from a user and forward the user input to the processor that is further adapted to use the user input to obtain the configuration key. It is advantageous that the processor is adapted to calculate the configuration key from at least the user input.

In yet another preferred embodiment, the configuration key is transient.

In yet another preferred embodiment, the configurator is portable.
In a second aspect, the invention is directed to a device having a communication interface adapted to receive a configuration key and an erase command, and a memory adapted to store the configuration key. The device further comprises a processor adapted to accept and store the configuration key in the memory if the memory does not already store any configuration key, to verify an erase command with the stored configuration key, and to erase the configuration key upon successful verification of the erase command.

In a preferred embodiment, the device is adapted to exchange configuration information with a configurator. The communication interface is further adapted to communicate configuration information with the configurator, the memory is further adapted to store the configuration information, and the processor is further adapted to accept and store the configuration information in the memory if the configuration information is successfully verified using the configuration key. It is advantageous that the memory may store a plurality of configuration keys of which one configuration key is a root configuration key and that the device is adapted to store a further configuration key if the further configuration key is successfully verified with the root configuration key.

### BRIEF DESCRIPTION OF THE DRAWINGS

Preferred features of the present invention will now be described, by way of example, with reference to the accompanying drawings, in which:
Figure 1 illustrates a network environment according to the invention;
Figure 2 illustrates exemplary embodiments of a configurator and a device to be configured according to the invention;
Figure 3 illustrates association of the configurator and a device according to the invention;
Figure 4 illustrates transfer of configuration information from a configurator to a device according to the invention;
Figure 5 illustrates transfer of configuration information from a first device to a second device via a configurator;
Figure 6 illustrates a state diagram of a configurator according to the invention;
Figure 7 illustrates a state diagram of a configurable device according to the invention; and
Figure 8 illustrates erasure of a configuration key in a configurable device.

### DETAILED DESCRIPTION OF PREFERRED EMBODIMENTS

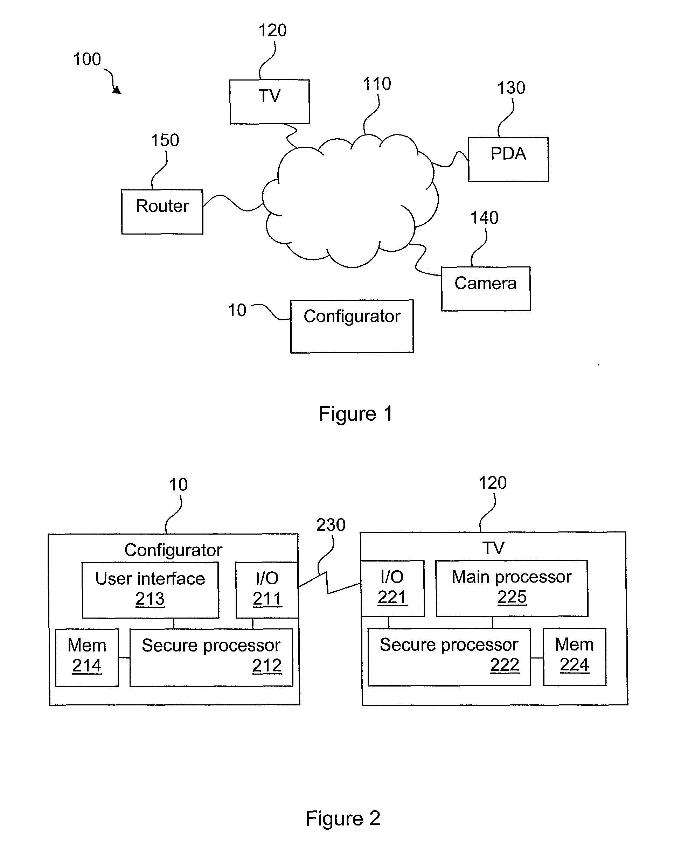

Figure 1 illustrates a network environment according to the invention. The network environment 100 comprises a TV 120, a Personal Digital Assistant (PDA) 130, a digital camera 140 and a router 150 interconnected in a, preferably wireless, network represented by a network cloud 110. The network environment 100 also comprises a configuration device 10, hereinafter called configurator, for use in configuration of other devices that are, or are about to be, connected to the network.

Figure 2 illustrates exemplary embodiments of the configurator 10 and a configurable device, in this case a TV 120. The configurator 10 comprises a user interface 213 that a user may use to enter a password or to create a key, a secure processor 212 and a secure memory 214 for calculating and storing keys and for checking passwords, and a communication interface (I/O) 211 for connection with other devices. The secure processor 212 and the secure memory 214 are preferably comprised in a unit that is hardware and software tamper resistant. The communication interface 211 may be capable of wired communication, e.g. a USB port, but is preferably adapted for wireless communication, such as via an infrared link or a proximity radio link, e.g. RFID as defined by ISO 14443. It is preferred that any communication link 230 with another device is resistant to eavesdropping. The configurator 10 is preferably easily portable to enable a user to bring it within communication range of a device to configure.

Similarly, the TV 120 comprises a communication interface 221, a secure memory 224 and a secure processor 222, of which the latter is connected to the main processor 225 of the TV 120. It should be noted that a device may comprise a second communication interface (not shown) for connection to the network 110.

In an alternate embodiment, wherein the configurable device lacks the secure processor and the secure memory, the configurator is adapted to embed software emulating these components on the configurable device.

A main idea of the invention is to associate the user (or group of users), via the configuration device, and the configured device by having the two share a secret: the device stores a configuration key, Kc, as a unique identity, and the user either knows the configuration key Kc or a further secret, such as for example a password, that may be used to generate the configuration key Kc. For reasons of simplicity, the following description will describe the configurator as being associated with the devices; this should be interpreted that a device is associated with a configurator with the correct association key, which is retrieved or calculated by the device upon successful identification of the user, preferably by a password.

When a configurator and a network device enter into contact, one of the following cases occur:
- If the network device is not associated with any configurator (a "virgin" device), then the network device associates with the data configurator. Once associated, it may securely receive the configuration information.
- If the network device is associated with the configurator, then it may either securely receive new configuration information or terminate the association under the request of the configurator.
- If the network device is not associated with the configurator, then it will refuse further interaction with the configurator.

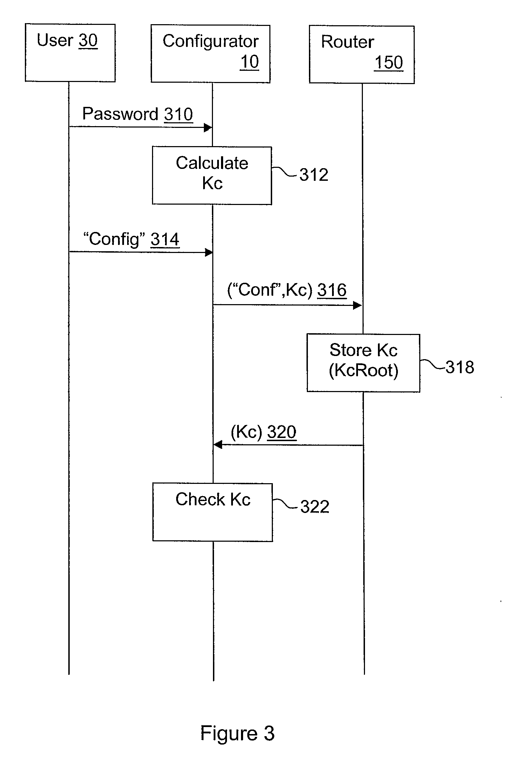

A preferred embodiment of the main idea of the invention will now be described in detail with reference to Figures 3-5.

Figure 3 illustrates association of the configurator 10 and a device, for example a router 150. The user 30 enters his password (illustrated as message 310) on the configurator 10 that then either retrieves or, preferably, calculates from the password the configuration key Kc, step 312. The user 30 then 314 instructs the configurator 10 to associate with the router 150, in a place where the former may communicate with the latter via the communication interfaces. To do this, the configurator 10 sends to the router 150 a message 316 comprising the configuration key Kc and a configuration command ("Conf"). The router 150 stores 318 the configuration key Kc and returns a message 320 with the configuration key Kc as a confirmation that the configuration key Kc has been stored by the router 150 and so that the configurator 10 may check, step 322, the configuration key Kc, if necessary. If the router 150 is adapted to store a plurality of configuration keys (see hereinafter), as the configuration key Kc is the first configuration key stored, the configuration key will be the root configuration key KcRoot (as indicated in box 318).

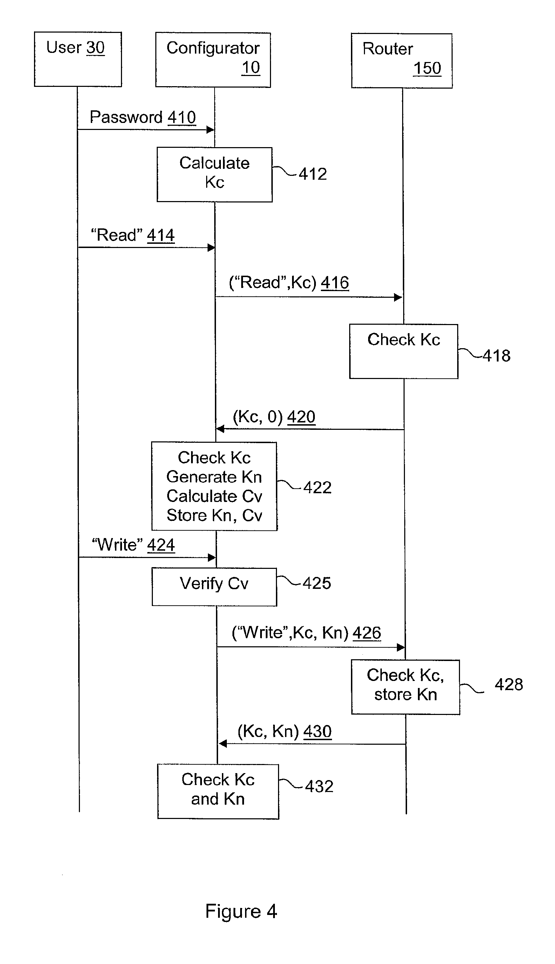

Figure 4 illustrates transfer of configuration information from a configurator 10 to a device, such as a router 150. As in Figure 3, the user 30 enters a password 410 and the configurator 10 calculates the configuration key Kc. The user 30 then instructs 414 the configurator 10 to retrieve, i.e. "Read", the configuration information, exemplified by a network key Kn, from the router 150, upon which the configurator 10 sends a message 416 that comprises a retrieve command "Read" and the configuration key Kc.

As explained hereinbefore, if the router 150 has associated with another configurator, i.e. the configuration key is incorrect, then the router 150 refuses to provide any information to the configurator. If the router 150 has not associated with any configurator, i.e. it is a virgin device, then it preferably associates with the configurator, but it is also possible that the router requires a specific association command, such as "Config" in Figure 3, to associate with the configurator. For the rest of Figure 4, it is assumed that the router 150 is associated with the configurator 10, but that it does not store any configuration information Kn.

Upon reception of the retrieve command 416, the router 150 verifies 418 the configuration key Kc, and returns a message 420 comprising the configuration key Kc and the configuration information Kn, which in this case is missing (indicated by '0'). The configurator 10 checks 422 the received configuration key Kc, and generates, for example by randomization, or retrieves from the memory 212 if stored therein, the configuration information Kn, which is stored in the configurator together with a check value Cv that creates a link between the configuration key Kc and configuration information Kn in the configurator 10. The check value Cv can for example be calculated as a hash of Kc concatenated with Kn. This link hinders, for example, a malicious user from borrowing the configurator 10 just after step 422 to configure its own devices with the configuration information Kn and thus be able to gain access to the network 110.

Then the configurator 10 preferably informs the user 30 that the router 150 lacks the configuration information Kn. It should be noted that the user 30 may also enter the configuration information Kn via the user interface 213 after being informed by the configurator 10 of the lack of configuration information Kn; the user 30 may enter the necessary information together with the transfer instruction 424 (see hereinafter).

The user 30 instructs 424 the configurator 30 to transfer ("Write") the configuration information Kn, upon which the configurator 10 verifies 425 the check value Cv. Upon successful verification, the configurator 10 sends a message 426 that comprises a write command "Write," the configuration key Kc, and the configuration information Kn. If the verification is not successful, the configurator 10 does not send any "Write" command.

Upon reception of the write command 426, the router 150 verifies the configuration key Kc and stores the configuration information Kn, step 428, after which it returns a message 430 comprising the configuration key Kc and the configuration information Kn. The configurator 10 checks the received configuration key Kc and configuration information Kn, step 432, and preferably informs the user 30 that the configuration information Kn has been transferred to the router 150.

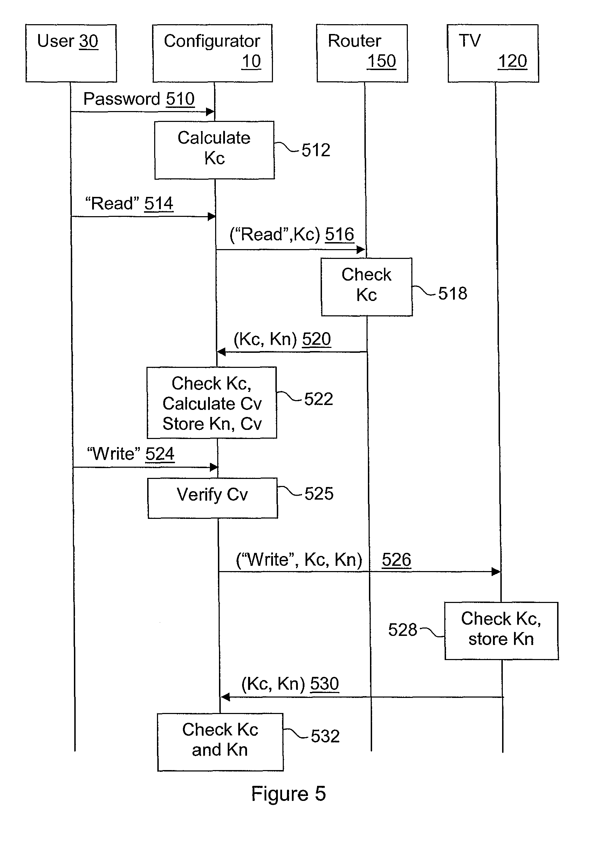

Figure 5 illustrates transfer of configuration information Kn from a router 150 to a TV 120 via a configurator 10. As in Figure 4, the user 30 enters a password 510, the configurator 10 calculates 512 or retrieves the configuration key Kc, and the user 30 instructs 514 the configurator 10 to retrieve ("Read") the configuration information Kn of the router 150. A retrieve command 516 is sent to the router 150 that verifies 518 the configuration key Kc and returns a message 520 that comprises the configuration key Kc and the configuration information Kn. The configurator 10 then verifies 522 the configuration key Kc and stores the configuration information Kn together with a check value Cv that creates a link between the configuration key Kc and the configuration information Kn in the configurator 10. The check value Cv can for example be calculated as a hash of the configuration key Kc concatenated with the configuration information Kn. This link hinders, for example, a malicious user from borrowing the configurator 10 just after step 522 to configure its own devices with the configuration information Kn and thus be able to gain access to the network 110.

The user 30 then, if necessary, moves so as to enable communication between the configurator 10 and the TV 120, and instructs 524 the configurator 10 to transfer the configuration information Kn to the TV 120, upon which the configurator 10 verifies 525 the check value Cv. Upon successful verification, the configurator 10 sends a message 526 that comprises a write command "Write," the configuration key Kc, and the configuration information Kn. If the verification is not successful, the configurator 10 does not send any "Write" command.

Upon reception of the write command 526, the TV 120 verifies the configuration key Kc and stores the configuration information Kn, step 528, after which it returns a message 530 comprising the configuration key Kc and the configuration information Kn. The configurator 10 checks the received configuration key Kc and configuration information Kn, step 532, and preferably informs the user 30 that the configuration information Kn has been transferred to the TV 120.

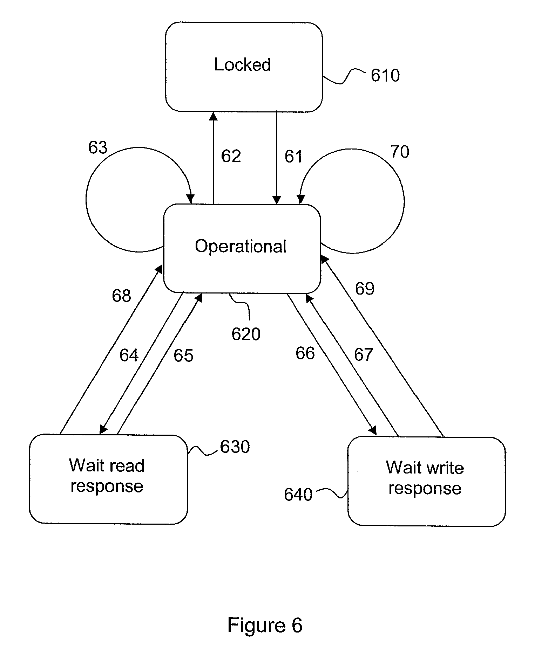

Figure 6 illustrates a state diagram of a configurator according to the invention. In the preferred initial state 610 the configurator is locked and only accepts a password 61 after which it moves to an operational state 620. It should be noted that in a preferred embodiment, the configurator uses the password to calculate the configuration key.

From the operational state 620, the configurator reverts to the locked state 610 if a timeout lapses or the configurator is switched off; arrow 62. Upon reception of an association instruction ("Config") the configurator sends an association command and returns to the operational state 620; arrow 63.

Upon reception of a retrieve instruction ("Read"), the configurator sends a retrieve command and enters a state 630 (arrow 64) in which it waits for a read response. The configurator then returns to the operational state 620 when a timeout lapses (arrow 68) or when it receives a response (arrow 65), in which case it verifies the configuration key and temporarily stores the configuration information.

Similarly, upon reception of a write instruction ("Write"), the configurator sends a write command and enters a state 640 (arrow 66) in which it waits for a write response. The configurator then returns to the operational state 620 when a timeout lapses (arrow 69) or when it receives a response (arrow 67), in which case it verifies the configuration key and preferably erases the configuration information.

Upon reception of an erase instruction, the configurator sends an erase command and returns to the operational state 620 (arrow 70).

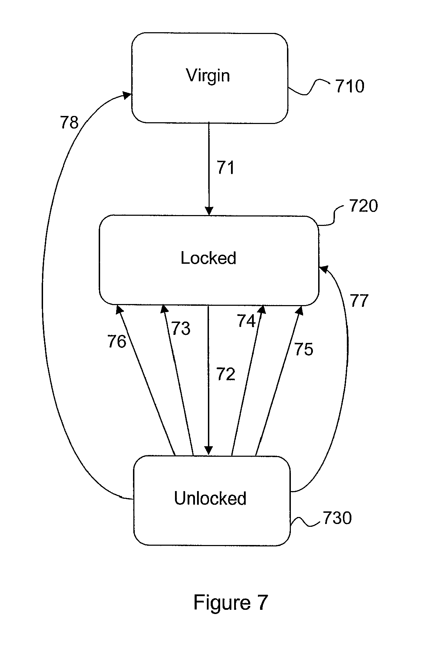

Figure 7 illustrates a state diagram of a configurable device according to the invention. A configurable device has three states: virgin 710, locked 720, and unlocked 730. In the virgin state 710, it is not associated with any configurator. Upon reception of an association command comprising a configuration key, it stores the configuration key and goes to the locked state 720 where it is associated with the configurator; arrow 71.

A configurable device remains in the locked state 720 until it receives a command with the correct configuration key, upon which it moves to the unlocked state 730 (arrow 72).

In the unlocked state 730, the configurable device may return to the locked state 720 after having i) received and stored configuration information, arrow 73; ii) returned its configuration information, arrow 74; iii) added a further configuration key if the received configuration key with which the device is associated is the root configuration key, arrow 75; iv) removed the current configuration key, provided it still stores at least one configuration key, arrow 76; v) timed out or having been switched off, arrow 77. From the unlocked state 730, upon reception of an erase command, the configurable device may also go to the virgin state after having erased all the configuration keys, arrow 78.

As has already been indicated, it is possible to associate a configurable device with several configuration keys Kc. The configuration key that the device first associates with becomes the root configuration key KcRoot and is, among other things, needed to add further configuration keys Kci and to erase all configuration keys so as to enable the configurable device to return to the virgin state. This is particularly suitable in an open environment (e.g. in a professional context) to provide privileged rights to an administrator holding a configuration key KcRoot, the administrator being able to grant configuration rights to other users through configuration keys Kci, and the administrator may also transfer the privileged rights.

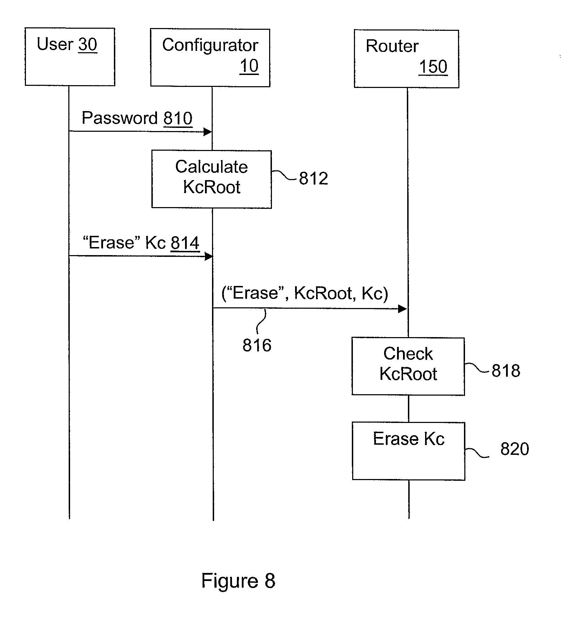

Figure 8 illustrates erasure of a configuration key in a configurable device. As in Figure 4, the user 30 enters a password 810, the configurator 10 calculates 812 or retrieves the root configuration key KcRoot. The user 30 the instructs 814 the configurator 10 to erase ("Erase") a particular configuration key Kc in the router 150. An erase command 816 is sent to the router 150 that verifies 818 the root configuration key KcRoot and erases 820 the configuration key Kc. It should be noted that the erase command 816 also could command the router 150 to erase all configuration keys Kc, including the root configuration key KcRoot, in which case the router 150 returns to the virgin state (710 in Figure 7). It should also be noted that the root configuration key KcRoot may be used to erase any configuration key Kc, while a configuration key that is not a root configuration key may only be used to erase itself. In embodiments where a device may only store a single configuration key, the erase command need not comprise an indication of the configuration key to erase.

It will be understood that for many applications, there is no difference between a root configuration key KcRoot and another configuration key Kc; for example, both kinds of configuration keys may be used to the method to retrieve configuration information Kn. When this is the case, it Kc is interchangeable with KcRoot in the Figures.

As will be appreciated, the present invention enables easy configuration of a network by bringing the configurator into proximity of the devices to configure and performing a few, simple operations, something that takes no more than a few seconds per device.

Possible advantages of invention are that keys are kept secret and not revealed; a device simply verifies and/or stores received keys with/over keys stored within a HW tamper resistant packaging. Furthermore, the configurator is small and user agnostic; it is protected by a password and a usage timeout, and information in the configurator is temporary and erased after any operation. A configurator may be used by many users without risking dissemination of the information; a user may thus e.g. simply buy a new configurator if the present one is lost or damaged and the configurator may also change ownership easily. The invention provides an easy way to grant privileged rights to a user who become administrator. It will also be appreciated that the configurator can be stand-alone, i.e. in a special device, or embedded in another device, such as a mobile phone or a PDA.

Furthermore, this invention is well adapted for screenless devices as well as devices equipped with limited storage or CPU power. Since the embedded device algorithm is based on comparing keys, it does not require any specific cryptographic feature.

It will be understood that the present invention has been described purely by way of example, and modifications of detail can be made without departing from the scope of the invention.

It will also be understood that it is possible for one physical device to accommodate the functions of more than one device described hereinbefore.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A configurator (10) adapted to exchange configuration information (Kn) with a device (120, 130, 140, 150), comprising:
a communication interface (211) adapted to communicate configuration information (Kn) with the device (120, 130, 140, 150);
**characterised in that** the configurator (10) further comprises a processor (212) adapted to obtain a configuration key (Kc) and to use the configuration key (Kc) to authenticate communication with the device (120, 130, 140, 150) via the communication interface (211).

2. The configurator as claimed in claim 1, wherein the processor (212) is adapted to authenticate communication by including the configuration key (Kc) in a message (316, 416, 426, 516, 526) to send to the device (120, 130, 140, 150) via the communication interface (211).

3. The configurator according to claim 1, wherein the processor (212) is adapted to calculate a check value (Cv) that creates a link between the configuration key (Kc) and the configuration information (Kn), and the configurator (10) further comprises a memory (214) adapted to store the configuration information (Kn) together with the check value (Cv).

4. The configurator as claimed in claim 1, further comprising a user interface (213) adapted to accept input from a user (30) and forward the user input to the processor (212) that is further adapted to use the user input to obtain the configuration key (Kc).

5. The configurator as claimed in claim 4, wherein the processor (212) is adapted to calculate the configuration key (Kc) from at least the user input.

6. The configurator as claimed in claim 1, wherein the configuration key (Kc) is transient.

7. The configurator as claimed in claim 1, wherein the configurator (10) is portable.

8. A device (120, 130, 140, 150) comprising:
a communication interface (221) adapted to receive a configuration key (KcRoot) and an erase command;
a memory (224) adapted to store the configuration key (KcRoot); **characterised in that** the device (120, 130, 140, 150) further comprises a processor (222) adapted to
accept and store the configuration key (KcRoot) in the memory (224) if the memory (224) does not already store any configuration key (KcRoot),
verify an erase command with the stored configuration key (KcRoot), and
erase the configuration key (KcRoot) upon successful verification of the erase command.

9. A device (120, 130, 140, 150) as claimed in claim 8, the device (120, 130, 140, 150) being adapted to exchange configuration information (Kn) with a configurator (10), wherein:
the communication interface (221) is further adapted to communicate configuration information (Kn) with the configurator (10);
the memory (224) is further adapted to store the configuration information (Kn); and
the processor (222) is further adapted to accept and store the configuration information (Kn) in the memory (224) if the configuration information (Kn) is successfully verified using the configuration key (KcRoot).

10. The device as claimed in claim 9 further **characterised in that** the memory may store a plurality of configuration keys (Kc) of which one configuration key is a root configuration key (KcRoot) and **in that** the device (120, 130, 140, 150) is adapted to store a further configuration key (Kc) if the further configuration key (Kc) is successfully verified with the root configuration key (KcRoot).
